# EUROPÄISCHE PATENTANMELDUNG

(11) **EP 1 229 686 A1**
(43) Veröffentlichungstag der Anmeldung: **07.08.2002**
(21) Anmeldenummer: 01102418.9
(22) Anmeldetag: 02.02.2001
(51) Int. Cl.: H04L 12/28

(54) **Verfahren zur Verifizierung von Fernsprechrückrufinformation für über das Internet eingeleitete Rückrufe**

(71) Anmelder: SIEMENS AKTIENGESELLSCHAFT, 80333 München (DE)
(72) Erfinder: Unger, Stefan, 82008 Unterhaching (DE)

(57) **Zusammenfassung**

Von einem Internet-Endgerät werden z.B. bei einem Click-todial Dienst Rückrufinformationen an ein Fernsprechnetz übermittelt. Zur Verifizierung wird vom Fernsprechnetz eine internetendgerätspezifische Information beim Zugangs-Server über das Internet abgefragt. Nach Vergleich der in der Rückrufinformation und der internettengerätspezifischen Information enthaltenen Rufnummerninformation wird der Rückruf eingeleitet oder verhindert. Hierdurch werden Rückrufe zu Teilnehmern verhindert, die den Rückruf nicht wünschen.

## Beschreibung

Die Erfindung bezieht sich auf ein Verfahren zum Verifizieren von Rückrufinformation, durch die von einem Internet-Endgerät ein PSTN Rückruf durch einem Internet-Dienstanbieter veranlasst wird, wobei die Internet-Verbindung durch einen Zugangs-Server gesteuert wird.

Derzeit sind Internet-Dienste weit verbreitet, bei denen die Möglichkeit besteht, über das Internet einen für den Kunden üblicherweise kostenlosen Rückruf einzuleiten. Beispiele für diese Internet-Dienste sind Click-to-Dial Anwendungen, über Internet aktivierte Weckrufe oder über Internet aktivierte Konferenzen.

Bei einer Anforderung eines telefonischen Rückrufs muss die Rufnummer des eigenen Anschlusses angegeben werden. Durch Angabe falscher Informationen fehlgesteuerte Rückrufe werden vermittlungs- und übertragungstechnische Ressourcen in den Kommunikationsnetzen und bei dem Dienstanbieter unnötigerweise bzw. missbräuchlicherweise beansprucht, und Endgeräte bzw. deren Benutzer rückgerufen, die keinen Rückruf wünschen. Darüber hinaus können bei Diensten, wo der Kunde die Kosten z.B. im Rahmen eines R-Gesprächs übernimmt, bei fehlgeleiteten Anrufen zusätzliche Kosten auf den Dienstanbieter zukommen. Des weiteren ist auf die juristische Absicherung bzw. die Verlässlichkeit der Rückrufinformation zu achten, um beispielsweise wiederholte nichtgewünschte Rückrufe zu vermeiden.

Eine Vorbeugung gegen einen derartigen Missbrauch besteht darin, die Gefahr durch falsche Angaben durch eine vorhergehende Registrierung oder Subskription der Teilnehmer einzudämmen. Diese Lösung lässt aber keine sofortige Nutzung des Dienstes durch beliebige Internetnutzer zu und würde deshalb Kunden von der Nutzung des Dienstes abhalten. Beispielsweise wären Click-to-dial Dienste, die die umgehende Benutzung durch beliebige Kunden vorsehen, nicht möglich.

Der Erfindung liegt die Aufgabe zugrunde, ein einfaches Verfahren zum Schutz gegen Missbrauch von Rückrufdiensten durch Angabe falscher Rückrufinformationen anzugeben, das ohne vorhergehenden Registrierung des Kunden beim Dienstanbieter auskommt.

Die Aufgabe wird ausgehend von einem Verfahren zum Verifizieren von Rückrufinformation gemäß den Merkmalen der Oberbegriffe der Patentansprüche 1 und 2 jeweils durch deren kennzeichnende Merkmale gelöst.

Der wesentliche Aspekt des erfindungsgemäßen Verfahrens besteht darin, dass im Server des Dienstanbieters die aktuell zugeordnete IP Adresse des jeweiligen Internet-Endgeräts erfasst und der Zugangs-Server anhand der IP Adresse identifiziert wird. Anschließend wird vom Server des Dienstanbieters eine internetendgerätspezifische Anfrage an den Zugangs-Server übermittelt. Auf die Anfrage hin wird im Zugangs-Server internetendgerätspezifische Information ermittelt und zu dem anfragenden Server übertragen. Schließlich wird mit Hilfe der vom Zugangs-Server übermittelten Information die Rückrufinformation verifiziert und in Abhängigkeit des Verifizierungsergebnisses ein Rückruf eingeleitet oder verhindert - Anspruch 1.

Das beschriebene Verfahren erlaubt ohne vorhergehende Registrierung des Internet-Endgeräts bzw. dessen Benutzer die angegebene Rückrufinformation zu verifizieren. Eventuelle Störer werden frühzeitig identifiziert und Störanrufe bereits im Server verhindert. Das Verfahren kann deshalb auch bei Click-to-dial Diensten eingesetzt werden, die die umgehende Benutzung durch beliebige Kunden vorsehen.

Der wesentliche Aspekt des weiteren erfindungsgemäßen Verfahrens besteht darin, dass im Server des Dienstanbieters die aktuell zugeordnete IP Adresse des jeweiligen Internet-Endgeräts erfasst und vom Server des Dienstanbieters an das Kommunikationssystem weitergegeben wird. Dort wird anhand der IP Adresse der Zugangs-Server identifiziert. Anschließend wird
vom Kommunikationssystem des Dienstanbieters eine internetendgerätspezifische Anfrage an den Zugangs-Server übermittelt. Auf diese Anfrage hin wird im Zugangs-Server internetendgerätspezifische Information ermittelt und zu dem anfragenden Kommunikationssystem übertragen. Schließlich wird mit Hilfe der vom Zugangs-Server übermittelten Information die Rückrufinformation verifiziert und in Abhängigkeit des Verifizierungsergebnisses ein Rückruf eingeleitet oder verhindert - Anspruch 2. Ein zusätzlicher Vorteil des weiteren erfindungsgemäßen Verfahrens besteht darin, dass der Server des Dienstanbieters sowohl dynamisch als auch hinsichtlich des Speicherbedarfs entlastet wird.

Eine Weiterbildung wird des erfindungsgemäßen Verfahrens ist darin zu sehen, dass die Rückrufinformation bei einem negativen Verifizierungsergebnisses in eine Liste von inkorrekten Informationen eingetragen wird. Die Liste wird dazu benützt, die von Internet-Endgeräten eingegebene Rückrufinformation mit den in der Liste gespeicherten, inkorrekten Informationen zu vergleichen und bei Gleichheit der eingegebenen Rückrufinformation mit einer in der Liste gespeicherten, inkorrekten Information den Rückruf zu verhindern
- Anspruch 3. Diese Liste stellt eine Negativ-Liste potentieller Störer dar. Das Anlegen einer derartigen Liste hat den Vorteil, dass potentielle Störer ohne eine weitere Anfrage an den Zugangs-Server direkt mithilfe dieser Liste identifiziert werden können. Dieses Vorgehen ist effizienter und erfordert weniger Speicherplatz als das Speichern aller eruierten endgerätspezifischen Informationen.

Andere vorteilhafte Weiterbildungen der Erfindung sind in den weiteren Unteransprüchen zu entnehmen.

Im folgenden wird das erfindungsgemäße Verfahren anhand von Figuren als Ausführungsbeispiel näher erläutert. Dabei zeigen
- Fig 1: eine Realisierung gemäß des ersten unabhängigen Anspruchs und
- Fig 2: eine Variante des Verfahrens gemäß des zweiten unabhängigen Anspruchs.

Dabei bezeichnen gleiche Bezeichnungen gleiche Elemente.

Die Figuren zeigen schematisch die Anordnung der wesentlichen Elemente, die bei der Realisierung eines Click-to-Dial (CtD) Dienstes - im weiteren als CtD-Dienst bezeichnet - erforderlich sind.

Für den Zugang zum Internet INT stellt der Internet-Dienstanbieter ein Internet Service Provider Netz ISPN mit einem AAA (Authentification, Authorisation, Accounting) Zugangs-Server ZS und einer über das LDAP (Lightweight directory access protocol) Protokoll ansteuerbaren Datenbank DB(LDAP) zur Verfügung. Ein Internet-Endgerät PC(TLN), beispielsweise eine Personal Computer, kann über das Internet Service Provider Netz ISPN mit dem Internet INT verbunden werden. Voraussetzung für die Benutzung des Zugangs-Servers ZS ist die vorausgehende Registrierung des Internet-Endgeräts PC(TLN). Üblicherweise wird im Zugangs-Server ZS eine Namensinformation ni, eine Rufnummerninformation rni, die z.B. aus einer Telefonnummer bzw. Calling Line Identity (CLI) oder einer ISDN-Adresse bestehen kann, und eine Adressinformation registriert. Ein Dienstanbieter eines CtD-Dienstes stellt einen Server SER(DA) zur Verfügung, der mit dem Internet INT verbunden ist. Der Server des Dienstanbieters SER(DA) ist zudem mit einem Fernsprechnetz PSTN, das in der Fachwelt auch als PSTN (public switched telephone network) bezeichnet wird, verbunden. Über ein Kommunikationssystem KS, z.B. einer Vermittlungsstelle oder einer Nebenstellenanlage, kann von einer vom Dienstanbieter dafür vorgesehenen Anlage TER(CC), z.B. Call Center, Ansageeinrichtung, an das Endgerät TER(TLN) eines Kunden bzw. Teilnehmer ein Anruf vermittelt werden. Bei dem teilnehmerseitigen Endgerät TER(TLN) kann es sich um ein Telefon oder ein Faxgerät handeln.

Bei einem CtD-Dienst wird von einem Internet-Endgerät PC(TLN) aus über das Internet INT ein üblicherweise für den Teilnehmer TLN kostenloser PSTN Rückruf über das Fernsprechnetz PSTN veranlasst. Bei einer Inanspruchnahme eines CtD-Dienstes wird das Internet-Endgerät PC(TLN) über den Zugangs-Server ZS mit dem Internet INT verbunden. Über das Internet INT wird von dem Internet-Endgerät PC(TLN) bei dem Server des Dienstanbieters SER(DA) eine Rückrufinformation rri abgesetzt, wodurch ein Rückruf angefordert wird. Diese Rückrufinformation rri enthält zumindest eine Rufnummerninformation ri und optional eine Namensinformation ni. Die Rufnummerninformation ri stellt meist eine Telefonnummer oder eine Faxnummer dar. Die an den Server des Dienstanbieters SER(DA) übermittelte Rückrufinformation rri wird in diesem erfasst und an das Kommunikationssystem KS weitergeleitet. Von dort aus wird ein Rückruf des kundenseitigen Endgeräts TER(TLN) durch die dafür vorgesehene Anlage TER(CC) eingeleitet.

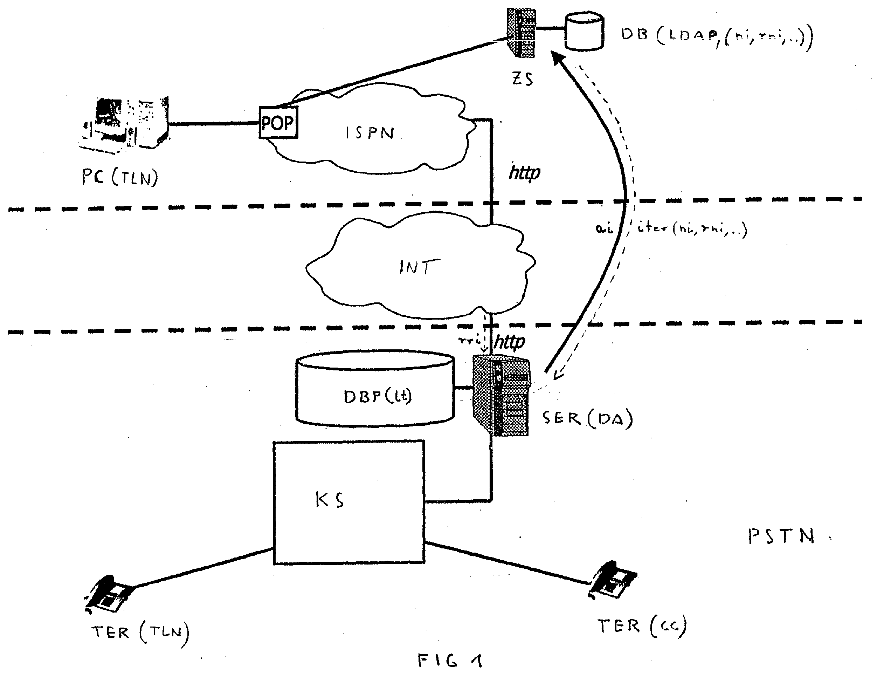

Bei dem erfindungsgemäßen Verfahren wird aus der vom Internet-Endgerät PC(TLN) übermittelten Rückrufinformation rri im Server des Dienstanbieters SER(DA) die zugehörige, aktuell gültige IP Adresse extrahiert. Diese kann bei einer Nachricht im HTTP Format aus dem TCP/IP Kopf (Header) der Nachricht gelesen werden. Aus einem vorgegebenen Teil der IP Adresse wird der vom Internet-Endgerät PC(TLN) benutzte Zugangs-Server ZS identifiziert. Vom Server des Dienstanbieters SER(DA) wird gemäß dem Internet-Protokoll eine internetendgerätspezifische Anfrageinformation ai an den Zugangs-Server ZS übermittelt und so eine Anfrage nach einer internetendgerätspezifischen Information iter(ni,rni,..) gestellt (Figur 1). Im Anwendungsbeispiel ist die internetendgerätspezifische Information iter(ni,rni,..), wie z.B. Namensinformation ni, Rufnummerninformation rni, Adressinformation, usw., in der mit dem Zugangs-Server ZS verbundenen LDAP Datenbank DB(LDAP,(ni,rni,..)) gespeichert. Die Anfrage vom Server des Dienstanbieters SER(DA) richtet sich nach relevanten internetendgerätspezifischen Informationen iter(ni,rni,..), z.B. Namensinformation ni und Rufnummerninformation rni, die zur Registrierung des Internet-Endgeräts PC(TLN) spezifiziert wurden. Die angefragten internetendgerätspezifischen Informationen iter(ni,rni,..) werden über das Internet INT an den Server des Dienstanbieters SER(DA) gesandt, wo ein internetendgerätspezifischer Datensatz lt, der in der Fachwelt auch als logging ticket bezeichnet wird, angelegt und ebenfalls in einer LDAP Datenbank DBP(lt) abgelegt wird. Dieser Datensatz lt kann z.B. die zur Vermittlung des Rückrufs benötigten Rufnummerninformationen rni, eine Namensinformation ni, eine Adressinformation und die zur Identifizierung des Zugangs-Servers verwendete IP Adresse enthalten. Hierbei ist vorausgesetzt, dass vorab eine Berechtigung vereinbart wurde, die den Zugriff auf die angefragten Informationen erlaubt. Falls keine Rufnummerninformation rni bei der Registrierung erfasst wurde, kann auch im Server des Dienstanbieters SER(DA) mittels eines elektronisch gespeicherten Namen/Rufnummernverzeichnisses die zur Namensinformation ni zugehörige Rufnummerninformation rni ermittelt werden. Die über Internet abgegebene Rückrufinformation rri wird mit dem internetendgerätspezifischer Datensatz lt verglichen und auf ihre Übereinstimmung überprüft. Abhängig vom Ergebnis der Verifikation der Rückrufinformation rri übermittelt der Server des Dienstanbieters SER(DA) dann eine Rückrufnachricht rrn an das Kommunikationssystem KS ab, wodurch der Rückruf eingeleitet wird, oder unterlässt das Übermitteln einer Rückrufnachricht rrn, wodurch die Einleitung des Rückrufs verhindert wird.

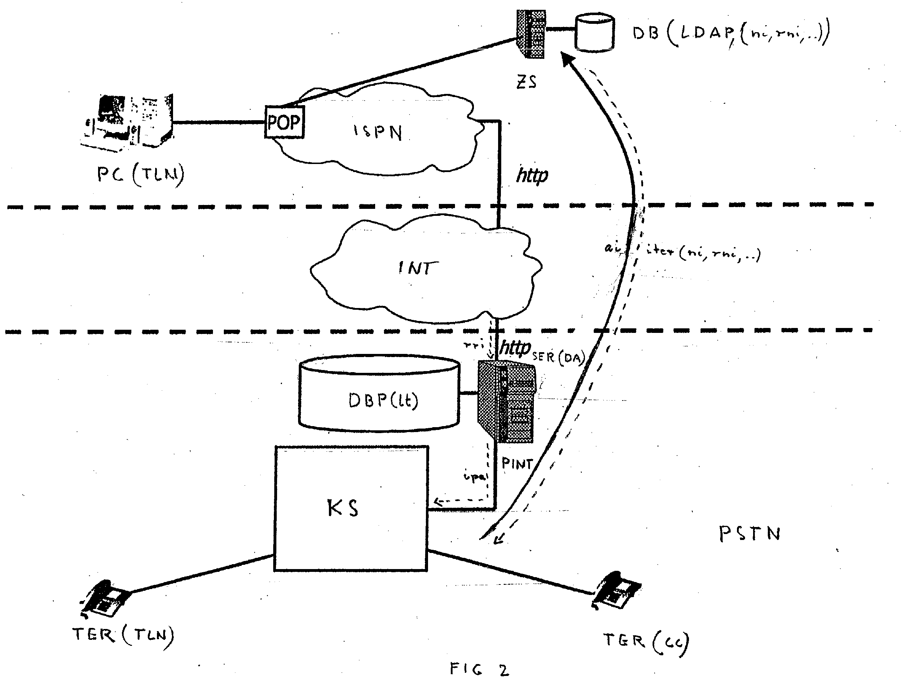

Alternativ zu dieser Realisierung kann die Anfrage nach internetendgerätspezifischer Information iter(ni,rni,..) auch vom Kommunikationssystem KS des Dienstanbieters aus erfolgen (Figur 2). Dabei wird die dem Internet-Endgerät PC(TLN) zugeordnete IP Adresse ipa auch vom Server des Dienstanbieters SER(DA) aus dem TCP/IP Kopf (Header) der zur Angabe der Rückrufinformation rri abgesetzten Nachricht ermittelt. Die IP Adresse wird dann an das vermittlungstechnischen Funktionen für den Aufbau und die Durchführung von PSTN Rückrufen bereitstellende Kommunikationssystem KS weitergegeben. Für die Weitergabe der IP Adresse ist evtl. eine Erweiterung des die Datenübertragung zwischen dem Server des Dienstanbieters SER(DA) und dem Kommunikationssystem KS steuernden Kommunikationsprotokolls erforderlich. Beispielsweise kann das PSTN/Internet Interworking Protokoll verwendet werden - in Figur 2 durch die Bezeichnung PINT angedeutet. Das Verfahren wird dann analog zum ersten Ausführungsbeispiel fortgesetzt, mit dem Unterschied, dass das Kommunikationssystem KS die Funktionen des Servers des Dienstanbieters SER(DA) bei der Anfrage nach der internetendgerätspezifischen Information i-ter(ni,rni,..), der Ermittlung dieser Information und der Verifikation der Rückrufinformation rri übernimmt. Abhängig von dem Verifikationsergebnis wird vom Kommunikationssystem KS einen Rückruf durch die dafür vorgesehene Anlage TER(CC) eingeleitet oder verhindert.

Das erfindungsgemäße Verfahren ist nicht auf die Ausführungsbeispiele beschränkt, sondern kann auch in anderen Netzkonfigurationen, beispielsweise mit ISPN-Netzen und Datennetzen verwendet werden, bei denen ein Rückruf über das Internet eingeleitet wird. Die Verifizierung der Rückrufinformationen kann auch in anderen Netzkomponenten der Kommunikationsnetze PSTN, ISDN, etc. durchgeführt werden.

## Patentansprüche

1. Verfahren zum Verifizieren von Rückrufinformation (rri), durch die von einem Internet-Endgerät (PC(TLN)) ein PSTN Rückruf durch einen Internet-Dienstanbieter veranlasst wird, wobei die Internet-Verbindung durch einen Zugangs-Server (ZS) gesteuert wird,
**dadurch gekennzeichnet,**
- **dass** im Server des Dienstanbieters (SER(DA)) die aktuell zugeordnete IP Adresse (ipa) des jeweiligen Internet-Endgeräts (PC(TLN)) erfasst und der Zugangs-Server (ZS) anhand der IP Adresse identifiziert wird,
- **dass** vom Server des Dienstanbieters (SER(DA)) eine internetendgerätspezifische Anfrage (ai) an den Zugangs-Server (ZS) übermittelt wird,
- **dass** im Zugangs-Server (ZS) eine internetendgerätspezifische
Information (iter(ni,rni,..)) ermittelt und zu dem anfragenden Server des Dienstanbieters (SER(DA)) übertragen wird,
- **dass** mit Hilfe der vom Zugangs-Server (ZS) übermittelten Information die Rückrufinformation (rri) verifiziert wird, und
- **dass** in Abhängigkeit des Verifizierungsergebnisses ein Rückruf eingeleitet oder verhindert wird.

2. Verfahren zum Verifizieren von Rückrufinformation (rri), durch die von einem Internet-Endgerät (PC(TLN)) ein PSTN Rückruf bei einem Internet-Dienstanbieter veranlasst wird, wobei die Internet-Verbindung durch einen Zugangs-Server (ZS) gesteuert wird, der mit einem die vermittlungstechnischen Funktionen für den Aufbau und die Durchführung von PSTN Rückrufen bereitstellenden Kommunikationssystem (KS) verbunden ist,
**dadurch gekennzeichnet,**
- **dass** im Server des Dienstanbieters (SER(DA)) die aktuell zugeordnete IP Adresse (ipa) des jeweiligen Internet-Endgeräts (PC(TLN)) erfasst wird,
- **dass** der Server des Dienstanbieters (SER(DA)) die IP Adresse
(ipa) an das Kommunikationssystem (KS) weitergibt, wo anhand
der IP Adresse (ipa) der Zugangs-Server ZS identifiziert wird,
- **dass** vom Kommunikationssystem (KS) des Dienstanbieters eine internetendgerätspezifische Anfrage (ai) an den Zugangs-Server (ZS) übermittelt wird,
- **dass** im Zugangs-Server (ZS) internetendgerätspezifische Information (iter(ni,rni,..)) ermittelt und zu dem anfragenden Kommunikationssystem (KS) übertragen wird,
- **dass** mit Hilfe der vom Zugangs-Server (ZS) übermittelten Information die Rückrufinformation (rri) verifiziert wird, und
- **dass** in Abhängigkeit des Verifizierungsergebnisses ein Rückruf eingeleitet oder verhindert wird.

3. Verfahren nach Anspruch 1 oder 2,
**dadurch gekennzeichnet,**
- **dass** die Rückrufinformation (rri) bei einem negativen Verifizierungsergebnisses in eine Liste von inkorrekten Informationen eingetragen wird,
- **dass** die von Internet-Endgeräten (PC(TLN)) eingegebene Rückrufinformation (rri) mit den in der Liste gespeicherten,
inkorrekten Informationen verglichen wird, und
- **dass** bei Übereinstimmung der eingegebenen Rückrufinformation
(rri) mit einer in der Liste gespeicherten, inkorrekten Information der Rückruf verhindert wird.

4. Verfahren nach einem der vorhergehenden Ansprüche 1 bis 3,
**dadurch gekennzeichnet,**
- **dass** die endgerätspezifische Information (iter(ni,rni,..)) durch eine Rufnummerninformation (ri) und/oder eine Namensinformation (ni) repräsentiert ist,
- **dass** die Rückrufinformation (rri) durch eine Rufnummerninformation (rni) und optional durch eine Namensinformation (ni) gebildet ist, und
- **dass** die Rufnummerninformation (rni) aus einer Telefonnummer
oder einer Faxnummer besteht.

5. Verfahren nach Anspruch 4,
**dadurch gekennzeichnet,**
- **dass** zumindest ein Teil der internetendgerätspezifischen Information (iter(ni,rni,..)) mit der eingegebenen Rückrufinformation (rri) verglichen wird, und
- **dass** bei Übereinstimmung der Rufnummerninformation (rni) ein
Rückruf mithilfe der Telefonnummer oder der Faxnummer über
das PSTN eingeleitet und bei Nichtübereinstimmung der Rückruf
verhindert wird.

6. Verfahren nach Anspruch 4,
**dadurch gekennzeichnet,**
- **dass** die im Zugangs-Server (ZS) ermittelte internetendgerätspezifische Information (iter(ni,rni,..)) eine Namensinformation (ni), jedoch keine Rufnummerninformation (rni) enthält, und
- **dass** die Rufnummerninformation (rni) mithilfe eines elektronisch gespeicherten Namens/Rufnummernverzeichnisses ermittelt wird.

7. Verfahren nach Anspruch 2,
**dadurch gekennzeichnet,**
**dass** das die Datenübertragung zwischen dem Server des Dienstanbieters SER(DA) und dem Kommunikationssystem (KS) steuernde Kommunikationsprotokoll für die internetendgerätspezifische Anfrage (ai) erweitert wird.

8. Verfahren nach einem der vorhergehenden Ansprüche,
**dadurch gekennzeichnet,**
- **dass** die beim Zugangs-Server (ZS) zur Registrierung des Internet-Endgeräts PC(TLN) abgegebene internetendgerätspezifische Informationen (iter(ni,rni,..)) auf einem zusätzlichen Server DB(LDAP,(ni,rni,..)) gespeichert ist, die mittels eines LDAP Protokolls gelesen wird, und
- **dass** vom Server des Dienstanbieters SER(DA) oder vom Kommunikationssystem (KS) mithilfe des LDAP Protokolls direkt auf diesen zusätzlichen Server DB(LDAP,(ni,rni,..)) zugegriffen wird und die internetendgerätspezifische Information (iter(ni,rni,..)) angefragt und übertragen wird.
